# FASCICULE DE BREVET EUROPEEN

(11) **EP 3 625 461 B1**
(45) Date de publication et mention de la délivrance du brevet: **06.07.2022**
(21) Numéro de dépôt: 18723859.7
(22) Date de dépôt: 17.05.2018
(51) Int. Cl.: F15B 11/00, A01F 25/20, F15B 15/28

(54) **SYSTEME DE SCIAGE**
SÄGEANLAGE
SAWING SYSTEM

(30) Priorité: 17.05.2017 FR 1754340
(43) Date de publication de la demande: 25.03.2020
(73) Titulaire: Etablissements Emily, 29800 Tréflévénez (FR)
(72) Inventeur: GUENGANT, Michel, 29440 Plougar (FR); MIOSSEC, Arnaud, 29440 Plouzevede (FR); RUNGOAT, David, 29800 Treflevenez (FR)
(74) Mandataire: Cabinet Le Guen Maillet
(86) Numéro de dépôt international: PCT/EP2018/062952
(87) Numéro de publication internationale: WO 2018/211022

(56) Documents cités:
- DE-A1-102009 017 879
- JP-A- 2000 337 304
- NL-A- 8 702 210
- US-A1- 2009 114 284

## Description

La présente invention concerne un système de sciage destiné à être monté sur un godet de désilage, sur une fourche à désiler ou toute machine de sciage conçue pour découper et prélever une portion de matière et notamment dans un fourrage stocké dans un silo, tel qu'un ensilage de maïs ou un ensilage d'herbe.

Dans la demande de brevet n° 1662329, le demandeur de la présente invention a mis au point un godet de désilage comprenant une benne, un berceau portant un organe de sciage et qui est monté à pivotement devant la benne pour découper une tranche de matière et notamment un fourrage, afin de la charger dans la benne. L'organe de sciage comprend des scies qui sont attelées respectivement à des vérins hydrauliques qui sont destinés à déplacer lesdites scies suivant un mouvement alternatif. Chaque vérin est du type à double effet.

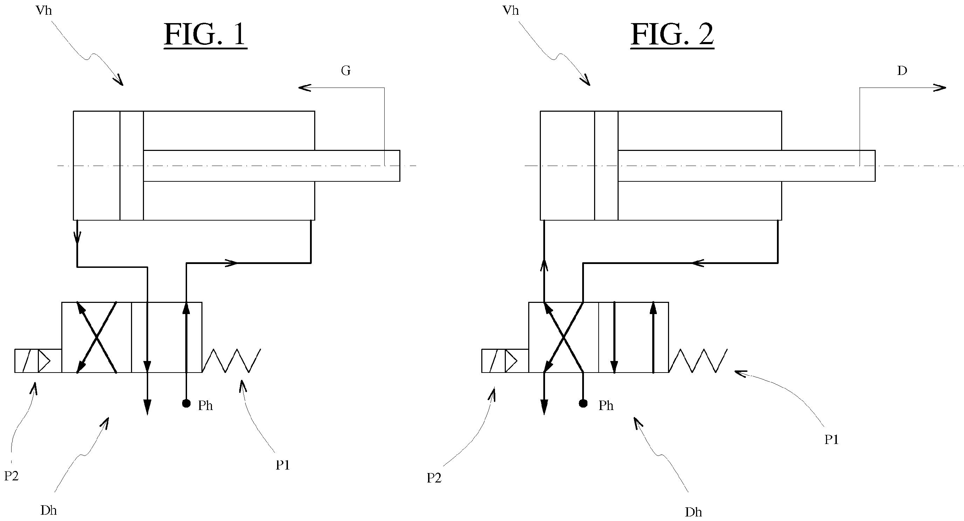

En référence aux Figs. 1 et 2, et pour inverser de manière répétitive le sens de déplacement d'un vérin hydraulique Vh à mouvement rectiligne, mis en œuvre, par exemple dans une machine, il est connu d'utiliser un distributeur hydraulique Dh, monostable, de type 4/2 et qui est raccordé à une pompe hydraulique Ph et un circuit de retour de l'huile dans un réservoir (non représenté). Le tiroir du distributeur est sur ces Figs. 1 et 2, déplacé par un ressort de rappel P1 et un électroaimant P2.

Sur la Fig. 1, le ressort de rappel P1 du distributeur Dh a déplacé son tiroir dans son premier état stable dit "parallèle", de sorte que la tige du vérin Vh se déplace vers la gauche, comme le suggère la flèche G.

Sur la Fig. 2, l'électroaimant P2 du distributeur Dh a déplacé son tiroir dans son second état stable dit "croisé", de sorte que la tige du vérin Vh se déplace vers la droite comme le suggère la flèche D.

L'inversion du positionnement du tiroir peut être mise en œuvre par l'intermédiaire d'un automate programmable utilisant, notamment, les signaux fournis par des capteurs détectant les deux fins de course de la tige de vérin, ou du piston qui lui est associé. On peut encore utiliser directement les signaux des capteurs de fin de course pour déplacer alternativement le tiroir du distributeur, par exemple en utilisant un distributeur bistable.

Lorsque l'on cherche à accélérer la cadence du mouvement alternatif du vérin, par exemple, pour faire fonctionner une scie de plus en plus rapidement, surviennent des contraintes qui limitent la fréquence de fonctionnement de la scie.

En effet, l'huile hydraulique utilisée comme fluide moteur est, contrairement à l'air dans un circuit pneumatique, par nature incompressible. A chaque commutation du tiroir pour inverser le sens de déplacement du vérin, la pression dans l'installation hydraulique monte brutalement pendant un court instant durant la phase transitoire de changement d'état dudit distributeur. Ces pics répétés de pression fatiguent l'installation hydraulique, notamment la pompe, les flexibles hydrauliques, les joints. L'utilisation d'un clapet de décharge dans l'installation hydraulique limite la montée en pression mais lorsque l'on accélère la cadence, il se déclenche de manière intempestive. Par ailleurs, certaines pompes hydrauliques, telles que les pompes à cylindrée variable équipées d'un circuit de détection de charge, ont un débit qui se réduit, voire, s'interrompt quand la pression qu'elles délivrent est trop forte. L'installation hydraulique s'arrête alors progressivement de fonctionner.

On connaît encore à la lecture du brevet NL8702210A, un appareil pour découper un silo. Il comprend un cadre portant dans sa partie basse, une fourche, un berceau de géométrie en C qui peut coulisser verticalement sur les deux montants du cadre. Le berceau est équipé de trois scies respectivement montées à coulissement sur les trois côtés du berceau. Le berceau est également équipé de trois vérins hydrauliques à double effet chargés de déplacer à coulissement les trois scies dans un mouvement alternatif. Les deux vérins latéraux sont à double tige et le vérin central est à double tige et à double chambres opposées. Les trois vérins sont raccordés en série, de sorte que leurs tiges se déplacent concomitamment. Les deux vérins latéraux sont raccordés à un distributeur hydraulique 4/2 à pilotage hydraulique et ils sont également raccordés respectivement aux deux chambres amont des deux chambres opposées du vérin central. Pendant la commutation, l'huile change de sens de circulation à l'intérieur du distributeur, ce qui génère un pic de surpression qui fatigue, au fil du temps, les composants de l'installation hydraulique.

Dans la publication DE-A1-10 2009 017879, est présenté un système d'alimentation en fluide d'un vérin pneumatique. Le système d'alimentation comporte une pluralité de modules de vannes comprenant chacun un corps de canal et quatre valves à deux voies qui sont interconnectées dans un pont et peuvent être commutées entre une position de blocage et une position de libération. Le fonctionnement d'au moins certaines valves est désynchronisé pour récupérer l'énergie cinétique du vérin pneumatique.

Partant de ce constat, le demandeur a cherché une solution pour concevoir un système de sciage incluant un berceau mobile sur lequel est monté au moins un vérin hydraulique à double effet attelé à une scie correspondante et qui est susceptible de fonctionner à une cadence relativement élevée.

A cet effet, est proposé un système de sciage destiné à être monté dans une machine pour découper une tranche de matière, comprenant un berceau sur lequel est monté au moins un vérin hydraulique à double effet attelé à une scie correspondante ; selon l'invention, le système de sciage comprend une paire de valves raccordées en montage parallèle, par l'intermédiaire d'un premier circuit hydraulique, à la chambre amont du vérin, une autre paire de valves raccordées en montage parallèle, par l'intermédiaire d'un second circuit hydraulique, à la chambre aval du vérin ou inversement, chaque valve étant du type 2/2.

En fonctionnement, c'est-à-dire en déplaçant le berceau dans une matière, le système de sciage peut de la sorte couper relativement rapidement une tranche de matière, par exemple dans un silo, en faisant commuter simultanément les deux paires de valves.

Selon une caractéristique additionnelle de l'invention, au moins une valve est du type à clapet.

Ce type de valve permet d'atteindre des fréquences de fonctionnement relativement rapides du vérin.

Selon une caractéristique additionnelle de l'invention, au moins une valve est du type à tiroir.

Ce type de valve est un peu moins performant.

Selon une caractéristique additionnelle de l'invention, au moins une valve est à pilotage monostable à rappel par ressort.

On peut utiliser un circuit électrique relativement simple pour faire fonctionner les quatre valves en exploitant, par exemple, les signaux de capteurs de fin de course montés sur le vérin.

Selon une caractéristique additionnelle de l'invention, au moins une valve est à pilotage bistable.

On peut utiliser directement les signaux de capteurs de fin de course montés sur le vérin.

Selon une caractéristique additionnelle de l'invention, au moins une valve est à pilotage électromagnétique.

Ce type de pilotage procure des commutations relativement rapides.

Selon une caractéristique additionnelle de l'invention, les deux paires de valves sont regroupées sur un seul bloc hydraulique.

Ce regroupement des quatre valves sur un même bloc hydraulique simplifie la pose et le raccordement desdites valves.

Selon une caractéristique additionnelle de l'invention, le système de sciage inclut deux capteurs disposés pour détecter les deux fins de course du vérin.

Ces signaux produits par ces capteurs sont avantageusement utilisés pour faire commuter les valves.

Selon une caractéristique additionnelle de l'invention, une machine incluant un tel système de sciage fait partie également de l'invention.

La machine de sciage peut ainsi travailler relativement rapidement.

Selon une caractéristique additionnelle de l'invention, le berceau de la machine présente une géométrie à trois côtés et qui porte respectivement des vérins hydrauliques raccordés en série et en ce que les vérins sont respectivement attelés à des scies.

Sa géométrie à trois côtés, par exemple en forme de C, lui permet de découper une tranche.

Selon une caractéristique additionnelle de l'invention, la machine est un godet de désilage.

Le godet de désilage est capable de trancher rapidement une tranche de matière dans un silo.

En variante de réalisation, la machine est une fourche de désilage.

La fourche de désilage est capable de trancher rapidement une tranche de matière dans un silo.

Selon une caractéristique additionnelle de l'invention, un procédé de fonctionnement d'un système de sciage comprenant au moins un vérin hydraulique à double effet attelé à une scie correspondante, fait partie aussi de l'invention ; le procédé consiste à utiliser quatre valves hydrauliques 2/2 et dont une paire est raccordée en montage parallèle, par l'intermédiaire d'un premier circuit hydraulique, à la chambre amont du vérin et dont l'autre paire est raccordée en montage parallèle, par l'intermédiaire d'un second circuit hydraulique, à la chambre aval du vérin ou inversement, et en ce qu'il consiste à commander de manière simultanée le pilotage de deux valves raccordées respectivement au premier circuit et au second circuit et le dépilotage des deux autres valves raccordées respectivement au second circuit et au premier circuit ou inversement.

Le procédé de l'invention réduit la formation de pics de surpression à chaque inversion. Il permet ainsi de faire fonctionner le vérin hydraulique à des cadences d'inversion de sens relativement élevées.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 représente un schéma de fonctionnement d'un vérin hydraulique à double effet raccordé à un distributeur hydraulique monostable, connu de l'état de la technique et dont le tiroir qui le compose est disposé dans un premier état,
la Fig. 2 représente un schéma de fonctionnement d'un vérin hydraulique à double effet raccordé à un distributeur hydraulique monostable, connu de l'état de la technique et dont le tiroir qui le compose est disposé dans un second état,

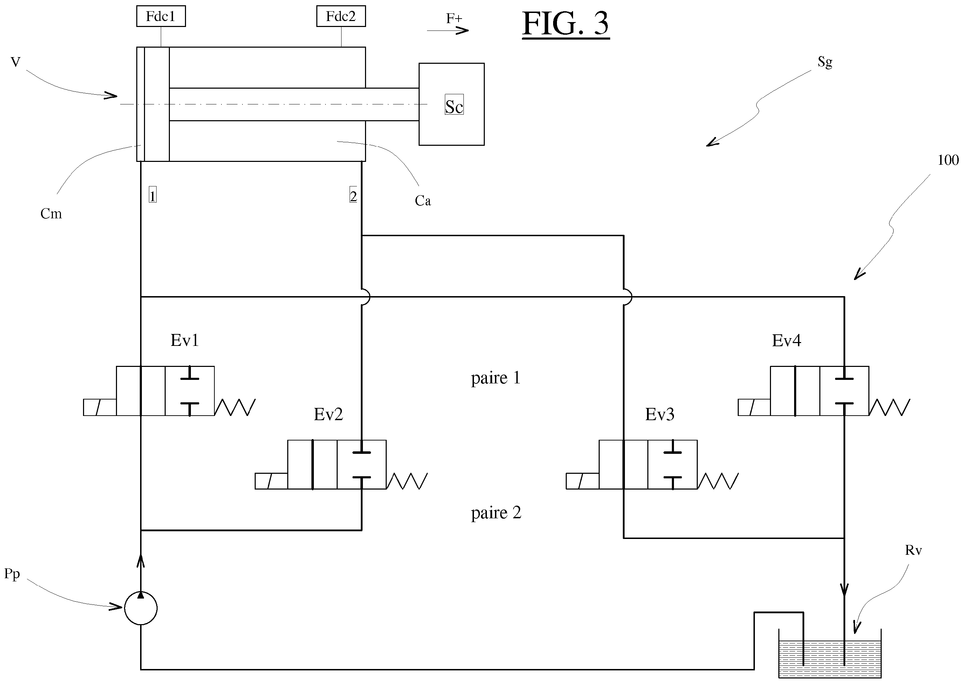

la Fig. 3 représente un schéma de fonctionnement d'un système de sciage comprenant, un moyen de commande pour inverser de manière répétitive, le sens de fonctionnement d'un vérin hydraulique à double effet, se déplaçant dans une direction, et qui est attelé à une scie, selon l'invention,

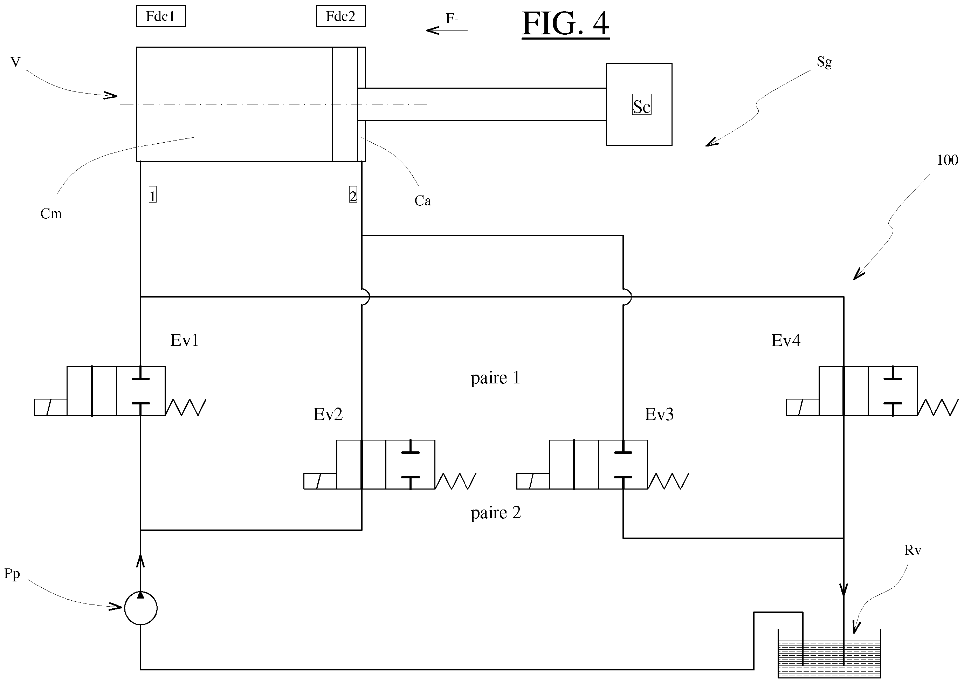

la Fig. 4 représente un schéma de fonctionnement d'un système de sciage comprenant, un moyen de commande pour inverser de manière répétitive, le sens de fonctionnement d'un vérin hydraulique à double effet, se déplaçant dans une direction opposée, et qui est attelé à une scie, selon l'invention,

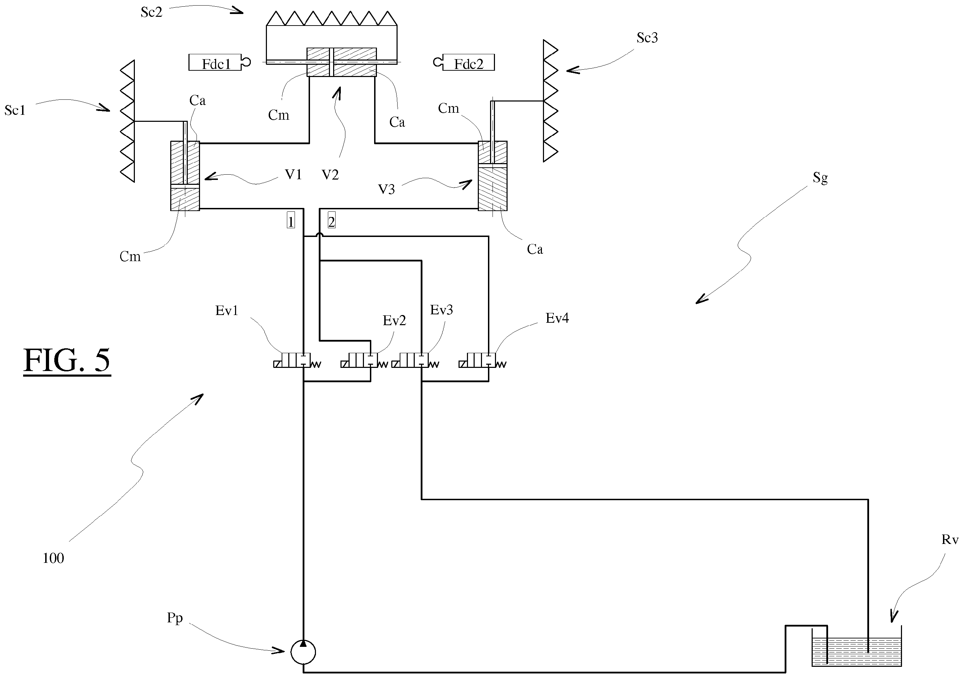

la Fig. 5 représente un schéma de fonctionnement d'un système de sciage, comprenant un moyen de commande pour inverser de manière répétitive, le sens de fonctionnement de trois vérins hydrauliques à double effet et qui sont attelés à des scies, selon l'invention,

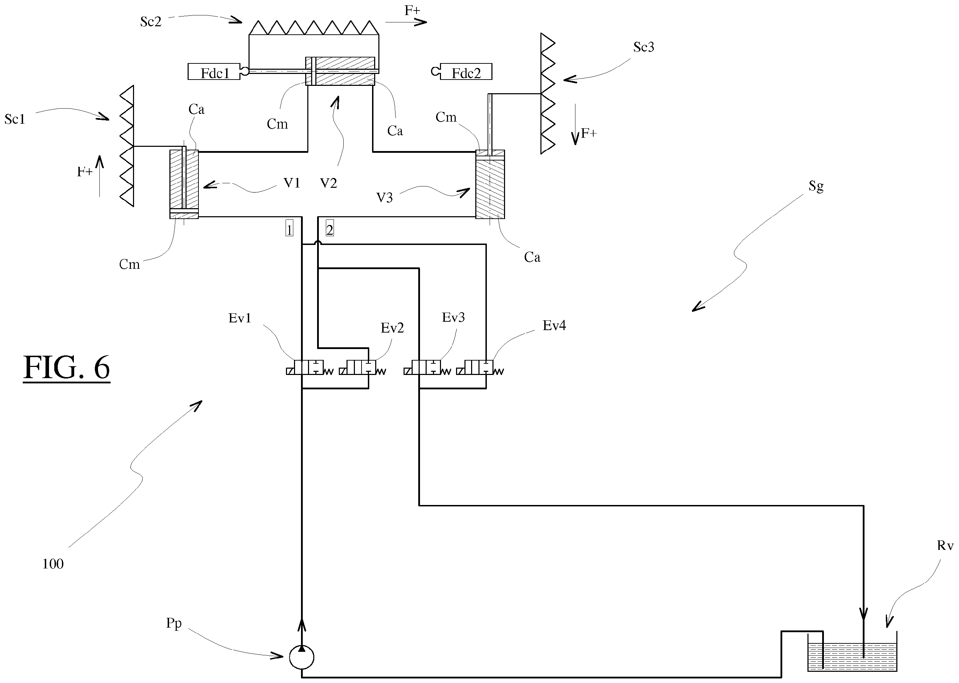

la Fig. 6 représente un schéma de fonctionnement d'un système de sciage, en fonctionnement comprenant un moyen de commande pour inverser de manière répétitive, le sens de fonctionnement de trois vérins hydrauliques à double effet, se déplaçant dans une direction, et qui sont attelés à des scies, selon l'invention,

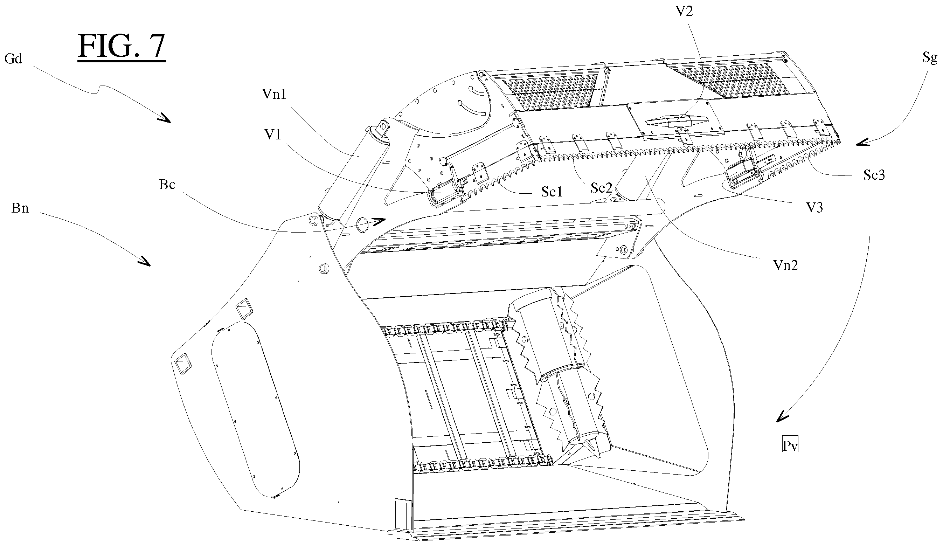

la Fig. 7 représente une vue en perspective d'un godet de désilage équipé d'un berceau portant des scies selon l'invention,

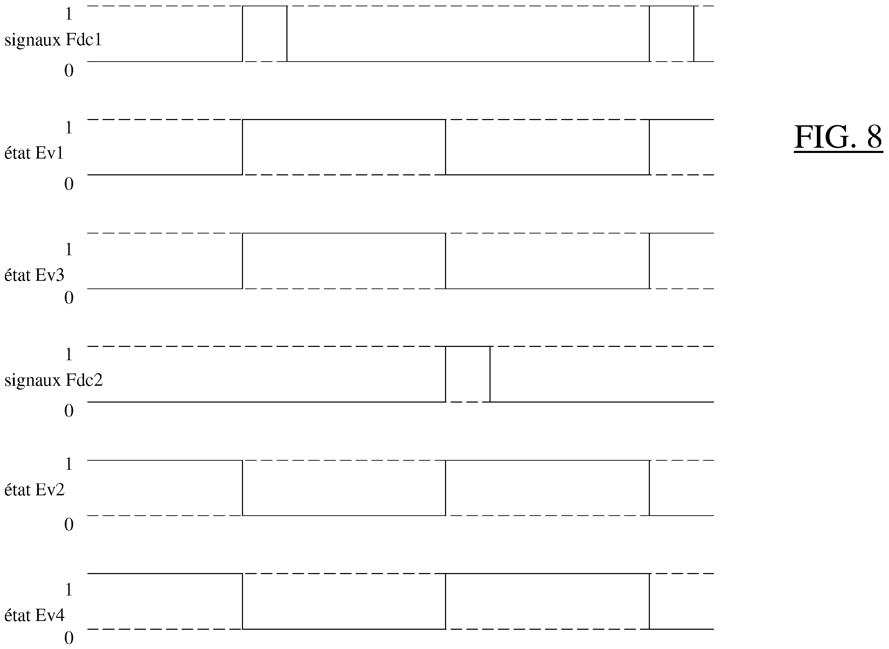

la Fig. 8 représente un grafcet des états de commutation de quatre valves hydrauliques dont est pourvu le moyen de commande, et des signaux de détections émis par des capteurs de fin de course d'un vérin hydraulique à double effet selon l'invention et,

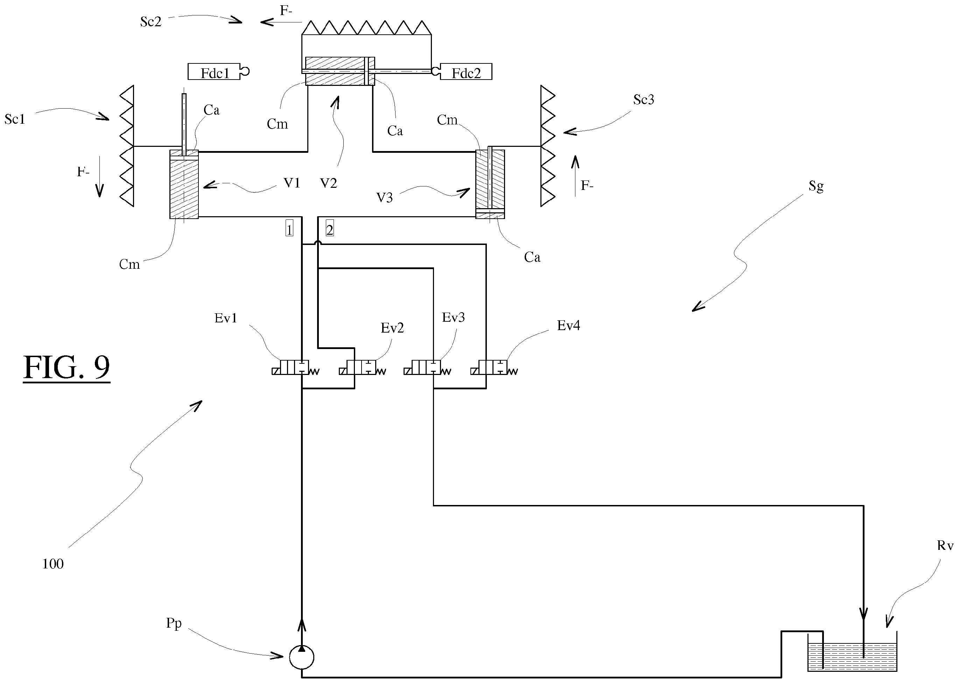

la Fig. 9 représente un schéma de fonctionnement d'un système de sciage en fonctionnement, comprenant un moyen de commande pour inverser de manière répétitive, le sens de fonctionnement de trois vérins hydrauliques à double effet, se déplaçant dans une direction opposée, et qui sont attelés à des scies, selon l'invention.

Sur la Fig. 3, est présenté un schéma de fonctionnement d'un système de sciage Sg.

Il comprend, notamment, un vérin hydraulique V à double effet, et qui est attelé à une scie Sc, un moyen de commande 100 conçu pour inverser de manière répétitive, le sens de fonctionnement dudit vérin hydraulique pour mettre en œuvre le mouvement alternatif de la scie Sc. Un berceau, non représenté, est utilisé pour porter le vérin et la scie.

Une pompe Pp sert à alimenter en huile sous pression, soit la chambre amont Cm du vérin V, soit sa chambre aval Ca, pour que le vérin puisse déplacer la scie Sc. L'huile présente dans la chambre aval ou amont est refoulée pendant le déplacement du piston du vérin, vers un réservoir Rv de retour et dans lequel la pompe Pp puise l'huile.

Deux capteurs de fin de course Fdc1 et Fdc2 sont utilisés pour détecter les deux fins de course du vérin. Les capteurs Fdc sont de préférence du type inductif. Ils sont fixés sur les deux extrémités du fût du vérin. Chaque capteur coopère avec le piston lorsqu'il atteint une fin de course, pour générer un signal électrique. Dans la pratique, le capteur est positionné de sorte à détecter la fin de course un peu avant que le piston n'arrive en butée, pour éviter un inutile pic de montée en pression.

Dans l'invention, le moyen de commande 100 comprend, quatre valves hydrauliques Ev qui sont sur cette Fig. 3, des valves hydrauliques à pilotage électromagnétique monostable à rappel par ressort. Elles sont raccordées par paires respectivement dans chacun de deux circuits hydrauliques 1 et 2 raccordés au vérin V. Les valves hydrauliques Ev sont préférentiellement du type normalement fermé, comme cela apparaît sur cette Fig. 3.

On distingue ainsi une première paire 1 de valves Ev1 et Ev4, une seconde paire 2 de valves Ev2 et Ev3. La première paire est raccordée au circuit hydraulique 1, raccordé à la chambre amont Cm du vérin V. La seconde paire est raccordée au circuit hydraulique 2, raccordé à la chambre aval Ca du vérin V.

Chaque valve Ev est du type 2/2. Elle peut être commutée entre un état fermé et un état ouvert, par exemple, par l'intermédiaire d'un solénoïde. La valve est pourvue d'un ressort de rappel qui sert à la commuter dans son état fermé quand le solénoïde n'est pas alimenté.

La première valve Ev1 ainsi que la quatrième valve Ev4 sont raccordées, d'une part, en montage parallèle avec le premier circuit hydraulique 1 et, d'autre part, à la pompe Pp. Celle-ci est raccordée au réservoir Rv.

La seconde valve Ev2 ainsi que la troisième valve Ev3 sont raccordées, d'une part, en montage parallèle avec le second circuit hydraulique 2 et, d'autre part, à la pompe Pp. Celle-ci est raccordée au réservoir Rv.

Le fonctionnement du moyen de commande 100 se présente de la manière suivante.

Les signaux des capteurs Fdc sont utilisés, directement ou à l'aide d'un automate programmable ou encore à l'aide d'une carte électronique, pour commuter l'état des valves Ev.

La pompe Pp est mise en fonctionnement.

Le capteur de fin de course Fdc1 détecte la présence du piston en fin de course dans la chambre amont Cm du vérin V. Il pilote directement ou par l'intermédiaire d'un automate programmable ou une carte électronique, le solénoïde de la valve Ev1 qui passe de son état fermé à son état ouvert, comme le montre la Fig. 3. Il pilote également la valve Ev3 qui passe de son état fermé à son état ouvert. Il dépilote et de manière simultanée les deux valves Ev2 et Ev4 qui passent de leur état ouvert à fermé. Le signal du capteur Fdc1 peut être maintenu suffisamment longtemps, par exemple par relayage, pour pouvoir être exploité.

Les quatre valves Ev commutent simultanément.

Le piston du vérin V change alors de sens de déplacement pour suivre la direction indiquée par la flèche F+ pour déplacer la scie Sc. Par convention, le déplacement du piston est qualifié de sens "aller".

Sur la Fig. 4, le capteur de fin de course Fdc2 détecte la présence du piston en fin de course dans la chambre aval Ca du vérin V. Il dépilote directement ou par l'intermédiaire d'un automate programmable ou une carte électronique, le solénoïde de la valve Ev1 qui passe de son état ouvert à son état fermé. Il dépilote également la valve Ev3 qui passe de son état ouvert à son état fermé. Il pilote également les deux valves Ev2 et Ev4 qui passent de leur état fermé à ouvert. Le signal du capteur Fdc2 peut être maintenu suffisamment longtemps, par exemple par relayage, pour pouvoir être exploité. Là encore, les quatre valves Ev commutent simultanément.

Le piston du vérin V change alors de sens de déplacement pour suivre la direction indiquée par la flèche F- pour déplacer en sens inverse la scie Sc. Par convention, le déplacement du piston est qualifié de sens "retour" sur cette Fig. 4.

Dans chaque cycle, l'état des quatre valves change simultanément et dans un court instant, de l'ordre du cinquantième de seconde. Les valves Ev1 et Ev3 changent pour un état, alors que les valves Ev2 et Ev4 changent pour un état opposé.

Dans l'état de la technique connu, la commutation du tiroir du distributeur hydraulique 4/2 entre ses deux états passe par un état transitoire dans lequel le sens de circulation des deux circuits de fluide hydraulique va être inversé dans le distributeur, ce qui génère des pics de surpression dans l'installation hydraulique.

Dans l'invention, on utilise quatre valves hydrauliques 2/2 électromagnétiques à la place d'un distributeur hydraulique 4/2.

Il n'y a pas d'inversion du sens de circulation de l'huile dans chaque valve pendant leur commutation.

Pendant leur commutation, deux valves Ev1, Ev3 raccordées respectivement au premier circuit 1 et au second circuit 2, commencent à se fermer, alors que les deux autres valves Ev2, Ev4 raccordées respectivement au second circuit 2 et au premier circuit 1, commencent à s'ouvrir ou inversement. Il n'y a donc pas de pic de suppression dans l'installation ou pour le moins il est fortement atténué.

La cadence de fonctionnement des scies peut être accrue.

L'inversion simultanée de l'état des quatre valves agit comme un aiguillage qui dévoie la direction de circulation de l'huile dans le vérin hydraulique du système de sciage.

Dans une utilisation avantageuse, le système de sciage est implanté dans un godet de désilage pour manœuvrer des scies.

De manière plus précise, et en référence à la Fig. 5, le sens d'inversion simultané de plusieurs vérins hydrauliques V à double effet peut être commandé par le moyen de commande 100. Trois vérins hydrauliques V1, V2 et V3 sont présentés sur cette Fig. Ils sont raccordés en série par l'intermédiaire de flexibles hydrauliques.

Trois scies Sc1, Sc2 et Sc3 sont respectivement attelées à ces trois vérins hydrauliques V1, V2 et V3 sur cette Fig. 5. Les vérins V1, V2 et V3 sont nommés respectivement premier, second et troisième (ou dernier) vérins.

Sur la Fig. 7, ces trois scies Sc sont portées par un berceau Bc monté à pivotement devant la benne Bn d'un godet de désilage Gd. Un tel godet de désilage est utilisé pour découper une tranche de matière et notamment un fourrage, afin de la charger dans la benne pour la transporter vers un lieu d'utilisation. Il est, à cet effet, porté par un engin de levage qui peut le manutentionner et le faire fonctionner. Le berceau Bc présente en vue de dessus une géométrie en C définie par trois côtés et dont au moins un porte une scie Sc. Sur cette Fig. 7, les trois côtés portent respectivement trois scies Sc1, Sc2 et Sc3. Les deux extrémités libres des deux côtés latéraux du berceau Bc sont montées à pivotement sur deux flancs latéraux constitutifs de la benne Bn. Un moyen de manœuvre, tel qu'une paire de vérins hydrauliques Vn1 et Vn2, est interposé entre les flancs latéraux de la benne Bn et les deux côtés latéraux du berceau Bc pour le faire pivoter devant l'ouverture de ladite benne, comme le suggère la flèche Pv.

Sur la Fig. 5, les trois scies Sc1, Sc2 et Sc3, sont attelées respectivement et mécaniquement aux trois vérins hydrauliques V1, V2 et V3, chargés de les mouvoir suivant un mouvement alternatif.

Les deux vérins latéraux V1 et V3 sont des vérins à simple tige. Le vérin central V2 est préférentiellement un vérin à double tige.

Les trois vérins V1, V2 et V3 sont raccordés en série par l'intermédiaire de flexibles hydrauliques.

La chambre amont Cm du vérin V1 est ainsi raccordée au premier circuit hydraulique 1. Sa chambre aval Ca est raccordée à la chambre amont Cm du second vérin V2. La chambre aval Ca de ce second vérin V2 est raccordée à la chambre amont Cm du troisième et dernier vérin V3. La chambre aval Ca de ce troisième vérin V est raccordée au second circuit hydraulique 2.

On remarquera que le volume de la chambre aval Ca du premier vérin V1 est pratiquement égal au volume de la chambre amont Cm du second vérin V2. Pareillement, le volume de la chambre aval Ca du second vérin V2 est pratiquement égal au volume de la chambre amont Cm du troisième vérin V3.

Sur la Fig. 6 et en faisant admettre de l'huile sous pression à l'aide d'une pompe Pp dans la chambre amont Cm du premier vérin V1, la scie Sc1 est déplacée et concomitamment, l'huile présente dans sa chambre aval Ca est transférée dans la chambre amont Cm du second vérin v2 qui déplace la scie Sc2. En même temps, l'huile présente dans la chambre aval Ca du second vérin V2 est transférée dans la chambre amont Cm du troisième vérin V3 qui déplace la scie Sc3. L'huile présente dans la chambre aval Ca du troisième vérin V3 est refoulée vers le réservoir Rv de retour et dans lequel la pompe Pp puise l'huile. De manière conventionnelle, le sens "aller" de déplacement des scies est matérialisé par les flèches F+. La pompe Pp peut être celle qui appartient à l'engin porteur du godet de désilage.

Deux capteurs de fin de course Fdc1 et Fdc2 sont utilisés pour détecter les deux fins de course d'un vérin. Ils sont préférentiellement montés sur le vérin central, c'est-à-dire sur le second vérin V2. Les capteurs Fdc sont de préférence du type inductif. Ils sont fixés sur les deux extrémités du fût du vérin. Chaque capteur coopère avec le piston lorsqu'il atteint une fin de course, pour générer un signal électrique.

Dans la pratique, le capteur est positionné de sorte à détecter la fin de course un peu avant que le piston n'arrive en butée, pour éviter un inutile pic de montée en pression.

Le moyen de commande 100 pour inverser de manière répétitive, le sens de fonctionnement des trois vérins hydrauliques à double effet à mouvement rectiligne alternatif pour entraîner des scies va maintenant être décrit.

Le moyen de commande 100 est interposé entre, d'une part, la pompe Pp, le réservoir Rv et, d'autre part, les deux vérins V1 et V3.

Dans le godet de désilage de l'invention, le moyen de commande 100 comprend, quatre valves hydrauliques Ev et qui sont sur la Fig. 5, des valves hydrauliques à pilotage électromagnétique monostable à rappel par ressort. Elles sont raccordées par paires dans chacun des deux circuits hydrauliques 1 et 2 raccordés respectivement à la chambre amont Cm du vérin V1 et à la chambre aval Ca du vérin V3. Les valves hydrauliques Ev sont préférentiellement du type normalement fermé, comme cela apparaît sur cette Fig. 5.

On distingue ainsi une première paire de valves Ev1 et Ev4, une seconde paire de valves Ev2 et Ev3.

Chaque valve Ev est du type 2/2. Elle peut être commutée entre un état fermé et un état ouvert, par exemple, par l'intermédiaire d'un solénoïde. La valve est pourvue d'un ressort de rappel qui sert à la commuter dans son état fermé quand le solénoïde n'est pas alimenté.

La première valve Ev1 ainsi que la quatrième valve Ev4 sont raccordées, d'une part, en montage parallèle avec le premier circuit hydraulique 1 et, d'autre part, à la pompe Pp. Celle-ci est raccordée au réservoir Rv.

La seconde valve Ev2 ainsi que la troisième valve Ev3 sont raccordées, d'une part, en montage parallèle avec le second circuit hydraulique 2 et, d'autre part, à la pompe Pp. Celle-ci est raccordée au réservoir Rv.

Le fonctionnement du moyen de commande 100 se présente de la manière suivante.

Les signaux des capteurs Fdc sont utilisés, directement ou à l'aide d'un automate programmable ou encore à l'aide d'une carte électronique, pour commuter l'état des valves Ev.

Le grafcet présenté sur la Fig. 8, montre les états de commutation des quatre valves Ev1-Ev4 du moyen de commande, ainsi que les signaux de détections émis par les deux capteurs de fin de course Fdc1, Fdc2, dans un cycle de fonctionnement des vérins, c'est-à-dire un cycle comprenant un déplacement "aller" et un déplacement "retour" des tiges de leurs pistons, visibles respectivement sur les Figs. 6 et 9.

La pompe Pp est mise en fonctionnement.

Sur la Fig. 8, l'état 0 du signal de chaque capteur Fdc indique qu'il ne détecte aucune fin de course du vérin, alors que l'état 1 indique qu'il détecte une fin de course. L'état 0 de chaque valve Ev indique son état fermé, alors que l'état 1 indique son état ouvert.

Le capteur de fin de course Fdc1 détecte la présence du piston en fin de course dans la chambre amont Cm du second vérin V2. Il pilote directement ou par l'intermédiaire d'un automate programmable ou une carte électronique, le solénoïde de la valve Ev1 qui passe de son état fermé à son état ouvert, comme le montre la Fig. 6. Il pilote également de manière simultanée la valve Ev3 qui passe de son état fermé à son état ouvert. Il dépilote et de manière également simultanée les deux valves Ev2 et Ev4 qui passent de leur état ouvert à fermé. Le signal du capteur Fdc1 peut être maintenu suffisamment longtemps, par exemple par relayage, pour pouvoir être exploité.

Les quatre valves Ev commutent simultanément.

Les trois pistons des trois vérins V changent alors simultanément de sens de déplacement pour suivre la direction indiquée par la flèche F+. Les trois scies Sc sont entraînées dans la même direction qualifiée, par convention, de sens "aller" sur la Fig. 6.

Sur la Fig. 9, le capteur de fin de course Fdc2 détecte la présence du piston en fin de course dans la chambre aval Ca du second vérin V2. Il dépilote directement ou par l'intermédiaire d'un automate programmable ou une carte électronique, le solénoïde de la valve Ev1 qui passe de son état ouvert à son état fermé. Il dépilote également de manière simultanée la valve Ev3 qui passe de son état ouvert à son état fermé. Il pilote également simultanée les deux valves Ev2 et Ev4 qui passent de leur état fermé à ouvert. Le signal du capteur Fdc2 peut être maintenu suffisamment longtemps, par exemple par relayage, pour pouvoir être exploité. Là encore, les quatre valves Ev commutent simultanément.

Les trois pistons des trois vérins V changent alors de sens de déplacement pour suivre la direction indiquée par la flèche F-. Les trois scies Sc sont entraînées dans la même direction qualifiée, par convention, de sens "retour" sur cette Fig. 9.

Dans chaque cycle, l'état des quatre valves changent simultanément et dans un court instant, de l'ordre du cinquantième de seconde. Les valves Ev1 et Ev3 changent pour un état, alors que les valves Ev2 et Ev4 changent pour un état opposé.

Un exemple de circuit électrique susceptible de faire fonctionner les quatre valves est le suivant. Le circuit comprend deux relais qui sont respectivement branchés sur les deux capteurs de fin de course. Le premier relais peut commuter un interrupteur qui est dans un état particulier au repos. Cet interrupteur bascule alors entre une première position dans laquelle il commute les solénoïdes de deux valves et une seconde position dans laquelle il commute les solénoïdes des deux autres valves. Le premier relais est auto-alimenté en courant, par exemple à l'aide d'une diode. Le second relais sert à couper ou à rétablir l'alimentation du premier relais. On remarquera qu'à chaque démarrage, la position des vérins s'initialise toujours de la même façon, grâce à l'état au repos de l'interrupteur, pour prendre leur position visible sur la Fig. 6.

Le premier relais sert, dès qu'il reçoit le signal d'un capteur de fin de course, à commuter l'interrupteur qui dépilote les solénoïdes de deux valves et pilote les solénoïdes des deux autres valves. Les vérins changent alors de sens de fonctionnement pour aller commuter l'autre fin de course. Un nouveau cycle de fonctionnement des vérins démarre alors.

Dans l'état de la technique connu, la commutation du tiroir du distributeur hydraulique 4/2 entre ses deux états passe par un état transitoire dans lequel le sens de circulation des deux circuits de fluide hydraulique va être inversé dans le distributeur, ce qui génère des pics de surpression dans l'installation hydraulique.

Dans l'invention, on utilise quatre valves hydrauliques 2/2 électromagnétiques à la place d'un distributeur hydraulique 4/2.

Il n'y a pas d'inversion du sens de circulation de l'huile dans chaque valve pendant leur commutation.

Pendant leur commutation, deux valves Ev1, Ev3 raccordées respectivement au premier circuit 1 et au second circuit 2, commencent à se fermer, alors que les deux autres valves Ev2, Ev4 raccordées respectivement au second circuit 2 et au premier circuit 1, commencent à s'ouvrir ou inversement. Il n'y a donc pas de pic de suppression dans l'installation ou pour le moins il est fortement atténué.

La cadence de fonctionnement du déplacement des scies peut être accrue.

L'inversion simultanée de l'état des quatre valves agit comme un aiguillage qui dévoie la direction de circulation de l'huile dans l'installation hydraulique.

La valve choisie est préférentiellement du type à clapet qui, du fait de sa faible course, permet de réduire la durée de sa phase transitoire et obtenir des fréquences relativement rapides de l'ordre de 5 Hz.

La valve Ev peut encore être du type à tiroir mais elle s'avère un peu moins performante en termes de rapidité.

Dans une variante de réalisation, non représenté, la valve électromagnétique à clapet ou à tiroir est du type bistable, actionnée par l'intermédiaire de deux solénoïdes. Dans cette variante de réalisation, les deux capteurs de fin de course peuvent commuter directement les deux solénoïdes.

Dans encore une autre variante de réalisation, non représentée, la valve à clapet ou à tiroir est à pilotage hydraulique simple ou double.

Ces différentes catégories de valves peuvent être mixées dans l'installation de l'invention.

Les deux paires de valves à clapet ou à tiroir sont, dans un mode de réalisation préféré, regroupées sur un seul bloc hydraulique, pour simplifier la pose et le raccordement desdites valves.

Le système de sciage Sg équipé de son moyen de commande 100 de l'invention évite, en fonctionnement, la formation de pics de surpression pendant l'inversion du sens de déplacement d'un vérin hydraulique à double effet et à mouvement rectiligne.

Sur la Fig. 7, le berceau Bc du godet de désilage Gd s'abaisse pendant le fonctionnement des scies Sc, comme le suggère la flèche Pv. Elles peuvent alors découper une tranche de matière notamment de fourrage dans un silo ou une botte, afin de la charger dans la benne. Le fonctionnement du godet de désilage est mis en œuvre par l'intermédiaire d'un distributeur principal qui est raccordé, par l'intermédiaire d'un diviseur de débit, aux quatre valves ainsi qu'aux deux vérins Vn1 et Vn2 chargés d'abaisser ou de faire remonter le berceau Bc porteur des scies, devant l'ouverture de la benne.

Dans une variante de réalisation, non représentée, le système de sciage est monté dans une fourche de désilage. Celle-ci est destinée à être attelée à un engin de levage qui peut ainsi la manutentionner et la faire fonctionner. L'engin de levage peut être un chargeur télescopique, un tracteur. La fourche de désilage est utilisée pour découper une tranche de matière et notamment une tranche de fourrage, afin de la charger et la transporter vers un lieu d'utilisation. La fourche de désilage comprend un châssis en forme de cadre dont la partie basse est pourvue d'une fourche destinée à pénétrer la matière, par exemple du fourrage contenu dans un silo.

Un berceau est monté à coulissement le long des deux côtés latéraux du châssis. Le berceau présente en vue de dessus une géométrie en C définie par trois côtés. Un moyen de manœuvre, tel qu'une paire de vérins hydrauliques, est monté sur le châssis pour déplacer par coulissement le berceau. La fourche de désilage est équipée d'un système de sciage comprenant au moins un vérin hydraulique à double effet et sur lequel est attelée une scie et qui sont tous deux montés sur le berceau. Dans la pratique, les trois côtés du berceau sont respectivement équipés de trois scies. Chaque scie est attelée à un vérin hydraulique à double effet chargé de la mouvoir suivant un mouvement alternatif. Le fonctionnement du système de sciage est semblable à celui qui vient d'être décrit en relation avec un godet de désilage. On attelle et raccorde la fourche de désilage à l'engin de levage, puis l'on vient prélever une portion de matière, par exemple dans un silo de fourrage. Le berceau est relevé préalablement, puis la fourche est insérée dans le silo, le berceau est abaissé en commandant le fonctionnement de ses vérins de manœuvre et les scies sont mises en service pour découper une tranche de matière dans le silo.

Là encore, les quatre valves chargées de mettre en œuvre le fonctionnement des vérins hydrauliques à double effet, commutent simultanément pour éviter les pics de pression dans le circuit hydraulique du système de sciage.

Sans sortir du cadre de l'invention, le système de sciage peut être monté dans une machine chargée de découper et d'extraire une tranche de matière, par exemple dans un silo, dans une botte de fourrage. Une telle machine peut être attelée, notamment, sur un chargeur télescopique, sur la fourche d'un tracteur ou sur son attelage à trois points.

## Revendications

1. Système de sciage (Sg) destiné à être monté dans une machine pour découper une tranche de matière, comprenant un berceau (Bc) sur lequel est monté au moins un vérin hydraulique (V) à double effet attelé à une scie (Sc) correspondante, **caractérisé en ce qu'**il comprend une paire de valves (Ev1, Ev4) raccordées en montage parallèle, par l'intermédiaire d'un premier circuit hydraulique (1), à la chambre amont (Cm) du vérin (V), une autre paire de valves (Ev2, Ev3) raccordées en montage parallèle, par l'intermédiaire d'un second circuit hydraulique (2), à la chambre aval (Ca) du vérin (V) ou inversement, chaque valve (Ev) étant du type 2/2.

2. Système de sciage (Sg) selon la revendication 1, **caractérisé en ce qu'**au moins une valve (Ev) est du type à clapet.

3. Système de sciage (Sg) selon la revendication 1 ou 2, **caractérisé en ce qu'**au moins une valve (Ev) est du type à tiroir.

4. Système de sciage (Sg) selon la revendication 1, 2 ou 3, **caractérisé en ce qu'**au moins une valve (Ev) est à pilotage monostable à rappel par ressort.

5. Système de sciage (Sg) selon l'une quelconque des revendications 1 à 4, **caractérisé en ce qu'**au moins une valve (Ev) est à pilotage bistable.

6. Système de sciage (Sg) selon l'une quelconque des revendications 4 ou 5, **caractérisé en ce qu'**au moins une valve (Ev) est à pilotage électromagnétique.

7. Système de sciage (Sg) selon l'une quelconque des revendications précédentes, **caractérisé en ce que** les deux paires de valves (Ev1, Ev4, Ev2, Ev3) sont regroupées sur un seul bloc hydraulique.

8. Système de sciage (Sg) selon l'une quelconque des revendications précédentes, **caractérisé en ce qu'**il inclut deux capteurs (Fdc1, Fdc2) disposés pour détecter les deux fins de course du vérin (V).

9. Machine de sciage, **caractérisée en ce qu'**elle inclut un système de sciage (Sg) selon l'une quelconque des revendications précédentes.

10. Machine de sciage selon la revendication 9, **caractérisée en ce que** le berceau (Bc) présente une géométrie à trois côtés et qui porte respectivement des vérins hydrauliques (V1, V2, V3) raccordés en série et **en ce que** les vérins sont respectivement attelés à des scies (Sc1, Sc2, Sc3).

11. Machine de sciage selon la revendication 9 ou 10, **caractérisée en ce que** la machine est un godet de désilage (Gd).

12. Machine de sciage selon la revendication 9 ou 10, **caractérisée en ce que** la machine est une fourche de désilage.

13. Procédé de fonctionnement d'un système de sciage (Sg) comprenant au moins un vérin hydraulique (V) à double effet attelé à une scie (Sc) correspondante, **caractérisé en ce qu'**il consiste à utiliser quatre valves hydrauliques (Ev) 2/2 et dont une paire (Ev1, Ev4) est raccordée en montage parallèle, par l'intermédiaire d'un premier circuit hydraulique (1), à la chambre amont (Cm) du vérin (V) et dont l'autre paire (Ev2, Ev3) est raccordée en montage parallèle, par l'intermédiaire d'un second circuit hydraulique (2), à la chambre aval (Ca) du vérin (V) ou inversement, et **en ce qu'**il consiste à commander de manière simultanée le pilotage de deux valves (Ev1 et Ev3) raccordées respectivement au premier circuit (1) et au second circuit (2) et le dépilotage des deux autres valves (Ev2, Ev4) raccordées respectivement au second circuit (2) et au premier circuit (1) ou inversement.

## Patentansprüche

1. Sägesystem (Sg) zur Montage in einer Maschine zum Abtrennen einer Scheibe Material, umfassend einen Träger (Bc), auf dem wenigstens ein doppelt wirkender Hydraulikzylinder (V) angebracht ist, der an eine entsprechende Säge (Sc) gekuppelt ist, **dadurch gekennzeichnet, dass** es ein Paar Ventile (Ev1, Ev4), die in Parallelschaltung mittels eines ersten Hydraulikkreises (1) mit der stromaufwärtigen Kammer (Cm) des Zylinders (V) verbunden sind, ein anderes Paar Ventile (Ev2, Ev3), die in Parallelschaltung mittels eines zweiten Hydraulikkreises (2) mit der stromabwärtigen Kammer (Ca) des Zylinders (V) verbunden sind, umfasst, oder umgekehrt, wobei jedes Ventil (Ev) vom Typ 2/2 ist.

2. Sägesystem (Sg) nach Anspruch 1, **dadurch gekennzeichnet, dass** wenigstens ein Ventil (Ev) vom Klappentyp ist.

3. Sägesystem (Sg) nach Anspruch 1 oder 2, **dadurch gekennzeichnet, dass** wenigstens ein Ventil (Ev) vom Schiebertyp ist.

4. Sägesystem (Sg) nach Anspruch 1, 2 oder 3, **dadurch gekennzeichnet, dass** wenigstens ein Ventil (Ev) mit monostabiler Ansteuerung mit Federrückholung ist.

5. Sägesystem (Sg) nach einem der Ansprüche 1 bis 4, **dadurch gekennzeichnet, dass** wenigstens ein Ventil (Ev) mit bistabiler Ansteuerung ist.

6. Sägesystem (Sg) nach einem der Ansprüche 4 oder 5, **dadurch gekennzeichnet, dass** wenigstens ein Ventil (Ev) mit elektromagnetischer Ansteuerung ist.

7. Sägesystem (Sg) nach einem der vorhergehenden Ansprüche, **dadurch gekennzeichnet, dass** die zwei Paare Ventile (Ev1, Ev4, Ev2, Ev3) auf einem einzelnen Hydraulikblock gruppiert sind.

8. Sägesystem (Sg) nach einem der vorhergehenden Ansprüche, **dadurch gekennzeichnet, dass** es zwei Sensoren (Fdc1, Fdc2) enthält, die angeordnet sind, die zwei Endstellungen des Zylinders (V) zu detektieren.

9. Sägemaschine, **dadurch gekennzeichnet, dass** sie ein Sägesystem (Sg) nach einem der vorhergehenden Ansprüche enthält.

10. Sägemaschine nach Anspruch 9, **dadurch gekennzeichnet, dass** der Träger (Bc) eine Geometrie mit drei Seiten aufweist, und der jeweils Hydraulikzylinder (V1, V2, V3) trägt, die in Reihe geschaltet sind, und dadurch, dass die Zylinder jeweils an Sägen (Sc1, Sc2, Sc3) gekuppelt sind.

11. Sägemaschine nach Anspruch 9 oder 10, **dadurch gekennzeichnet, dass** die Maschine eine Silageentnahmeschaufel (Gd) ist.

12. Sägemaschine nach Anspruch 9 oder 10, **dadurch gekennzeichnet, dass** die Maschine eine Silageentnahmegabel ist.

13. Betriebsverfahren eines Sägesystems (Sg), das wenigstens einen doppelt wirkenden Hydraulikzylinder (V) umfasst, der an eine entsprechende Säge (Sc) gekuppelt ist, **dadurch gekennzeichnet, dass** es darin besteht, vier 2/2-Hydraulikventile (Ev) zu nutzen, und von denen ein Paar (Ev1, Ev4) in Parallelschaltung mittels eines ersten Hydraulikkreises (1) mit der stromaufwärtigen Kammer (Cm) des Zylinders (V) verbunden ist, und von denen das andere Paar (Ev2, Ev3) in Parallelschaltung mittels eines zweiten Hydraulikkreises (2) mit der stromabwärtigen Kammer (Ca) des Zylinders (V) verbunden ist, oder umgekehrt, und dadurch, dass es darin besteht, gleichzeitig die Ansteuerung zweier Ventile (Ev1 und Ev3), die jeweils mit dem ersten Kreis (1) und dem zweiten Kreis (2) verbunden sind, und die Deaktivierung der zwei anderen Ventile (Ev2, Ev4) zu steuern, die jeweils mit dem zweiten Kreis (2) und dem ersten Kreis (1) verbunden sind, oder umgekehrt.

## Claims

1. Sawing system (Sg) intended to be mounted in a machine for cutting a slice of material, comprising a cradle (Bc) on which at least one double-acting hydraulic ram (V) hitched to a corresponding saw (Sc) is mounted, **characterized in that** it comprises a pair of valves (Ev1, Ev4) that are connected in a parallel assembly, by way of a first hydraulic circuit (1), to the upstream chamber (Cm) of the ram (V), another pair of valves (Ev2, Ev3) that are connected in a parallel assembly, by way of a second hydraulic circuit (2), to the downstream chamber (Ca) of the ram (V), or vice versa, each valve (Ev) being of the 2/2 type.

2. Sawing system (Sg) according to Claim 1, **characterized in that** at least one valve (Ev) is of the gate type.

3. Sawing system (Sg) according to Claim 1 or 2, **characterized in that** at least one valve (Ev) is of the slide type.

4. Sawing system (Sg) according to Claim 1, 2 or 3, **characterized in that** at least one valve (Ev) has monostable spring return control.

5. Sawing system (Sg) according to any one of Claims 1 to 4, **characterized in that** at least one valve (Ev) has bistable control.

6. Sawing system (Sg) according to either one of Claims 4 and 5, **characterized in that** at least one valve (Ev) has electromagnetic control.

7. Sawing system (Sg) according to any one of the preceding claims, **characterized in that** the two pairs of valves (Ev1, Ev4, Ev2, Ev3) are grouped together in a single hydraulic block.

8. Sawing system (Sg) according to any one of the preceding claims, **characterized in that** it includes two sensors (Fdc1, Fdc2) that are disposed to detect the two ends-of-travel of the ram (V).

9. Sawing machine, **characterized in that** it includes a sawing system (Sg) according to any one of the preceding claims.

10. Sawing machine according to Claim 9, **characterized in that** the cradle (Bc) has a geometry with three sides which respectively bear hydraulic rams (V1, V2, V3) that are connected in series, and **in that** the rams are respectively hitched to saws (Sc1, Sc2, Sc3).

11. Sawing machine according to Claim 9 or 10, **characterized in that** the machine is a silo unloader bucket (Gd).

12. Sawing machine according to Claim 9 or 10, **characterized in that** the machine is a silo unloader fork.

13. Method for operating a sawing system (Sg) comprising at least one double-acting hydraulic ram (V) hitched to a corresponding saw (Sc), **characterized in that** it consists in utilizing four hydraulic 2/2 valves (Ev), of which one pair (Ev1, Ev4) is connected in a parallel assembly, by way of a first hydraulic circuit (1), to the upstream chamber (Cm) of the ram (V), and of which the other pair (Ev2, Ev3) is connected in a parallel assembly, by way of a second hydraulic circuit (2), to the downstream chamber (Ca) of the ram (V), or vice versa, and **in that** it consists in simultaneously commanding the control of two valves (Ev1 and Ev3) that are respectively connected to the first circuit (1) and to the second circuit (2), and the release of control of the other two valves (Ev2, Ev4) that are respectively connected to the second circuit (2) and to the first circuit (1), or vice versa.
